# EUROPÄISCHE PATENTSCHRIFT

(11) **EP 3 403 004 B1**
(45) Veröffentlichungstag und Bekanntmachung des Hinweises auf die Patenterteilung: **11.09.2019**
(21) Anmeldenummer: 16823274.2
(22) Anmeldetag: 21.12.2016
(51) Int. Cl.: F16H 7/12, B65G 41/00

(54) **RIEMENSPANNVORRICHTUNG**
BELT-TENSIONING DEVICE
DISPOSITIF TENDEUR DE COURROIE

(30) Priorität: 13.01.2016 DE 102016100509
(43) Veröffentlichungstag der Anmeldung: 21.11.2018
(73) Patentinhaber: Kleemann GmbH, 73037 Göppingen (DE)
(72) Erfinder: LEBENDER, Frank, 73344 Gruibingen (DE); DANIEL, Andreas, 04159 Leipzig (DE); BELOSEVIC, Vjekoslav, 73035 Göppingen (DE); KÖHLER, Tobias, 73054 Eislingen (DE); FÜLLER, Karl, 73345 Hohenstadt (DE); BLESSING, Otto, 73566 Bartholomä (DE)
(74) Vertreter: Herrmann, Jochen
(86) Internationale Anmeldenummer: PCT/EP2016/082157
(87) Internationale Veröffentlichungsnummer: WO 2017/121594

(56) Entgegenhaltungen:
- DE-T2- 69 505 732
- JP-A- 2010 266 010
- US-A- 5 938 551
- US-A1- 2002 039 943
- US-A1- 2013 277 175

## Beschreibung

Die Erfindung betrifft eine Riemenspannvorrichtung für einen Gesteinsbrecher, eine Siebanlage oder dergleichen zum Spannen wenigstens eines umlaufenden Antriebsriemens, der um eine Riemenscheibe eines Antriebs umgelenkt ist und einen Last-, sowie einen Leertrum aufweist, wobei mittels des Antriebsriemens der Antrieb mit einem Brechaggregat, einer Siebeinheit, einem Generator oder dergleichen des Gesteinsbrechers antreibbar ist, gemäß dem Oberbegriff des Anspruchs 1. So eine Riemenspannvorrichtung ist und wie sie aus der JP2010266010A bekannt.

Gesteinsbrecher besitzen einen Antriebsmotor, beispielsweise einen Verbrennungsmotor oder einen Elektromotor. Dieser treibt über ein Riemensystem ein Brechaggregat, beispielsweise ein Kegelbrech-Aggregat, an. Um dem Antriebsriemen die nötige Spannung aufzugeben, beziehungsweise die Spannung zu erhalten, wird ein Riemenspanner verwendet. Dieser umfasst üblicherweise eine Spannrolle, die von einem Spannarm getragen ist. Der Spannarm ist über ein Spannsystem an das Maschinenchassis des Gesteinsbrechers angekoppelt. Während des Betriebseinsatzes führt das Brechaggregat Schwingungen aus. Diese übertragen sich in die Antriebsriemen. Dadurch wird auch die Riemenspannvorrichtung in Schwingung versetzt. Auf diese Weise werden Kräfte und Schwingungen in das Maschinenchassis eingebracht. Dies ist zum einen aus Komfortgründen unerwünscht, zum anderen führt dies zum Teil zu erheblichen Bauteilbeanspruchungen. Gleiches gilt mit ähnlichen Effekten für Siebmaschinen, beziehungsweise beim Antrieb von Generatoren oder Pumpen insbesondere in Gesteinsbrechern oder Siebanlagen

Es ist Aufgabe der Erfindung, eine Riemenspannvorrichtung der eingangs erwähnten Art bereitzustellen, mit der die Schwingungsbelastung des angeschlossenen Maschinenchassis deutlich reduziert wird und mit der, trotz der auftretenden Schwingungen und dem auftretendem Verschleiß, eine verbindliche Riemenspannung gewährleistet ist.

Diese Aufgabe wird mit einer Riemenspannvorrichtung mit den Merkmalen des Anspruchs 1 gelöst.

Mit den Spannrollen und den beiden Spannteilen wird ein in sich geschlossenes Kraftübertragungssystem gebildet. So stützen sich die Spannrollen über die Spannteile gegeneinander ab. Die beiden Spannrollen geben im Spannzustand eine Vorspannung sowohl auf den Last- als auch den Leertrum auf, in dem sie auf deren Riemenrücken einwirken. Dies hat den Vorteil, dass der Umschlingungswinkel, der sich an Last- und Leertrum anschließenden Riemenscheiben vergrößert. Auf diese Weise lassen sich höhere Antriebsmomente übertragen, oder es kann bei gleicher Antriebsleistung kostengünstig ein einfacherer Antriebsriemen verwendet werden. Denkbar ist es auch, bei sogenannten Mehr-Riemen-Systemen die Anzahl der Antriebsriemen zu reduzieren.

Von Vorteil ist bei der erfindungsgemäßen Anordnung weiterhin, dass sich die Gesamtspannung auf die beiden Spannrollen verteilt, was zu einfacheren Bauteilen führt. Darüber hinaus verteilt sich auch der erforderliche Gesamt-Spannweg auf die beiden Spannrollen. Dadurch wird aber die Biegung des Antriebsriemens im Bereich der Spannrollen gegenüber einem Ein-Rollen-System reduziert. Dies führt zu einer höheren Standzeit des Antriebsriemens. Die erfindungsgemäße Riemenspannvorrichtung kann auch ohne weiteres bei Systemen verwendet werden, bei denen die Laufrichtung des Antriebsriemens oder die Lastrichtung, bei gleicher Laufrichtung wechseln kann.

Gemäß einer bevorzugten Ausgestaltungsvariante der Erfindung kann es vorgesehen sein, dass die beiden Spannteile jeweils ein Stellglied aufweisen, mittels dem sie in und entgegengesetzt zur Spannrichtung verstellbar sind. Auf diese Weise können die Spannteile die Oszillation des Antriebsriemens infolge der betriebsbedingten Schwingungen ausgleichen, ohne dass der Maschinenkörper übermäßig beansprucht wird. Schwingungen, welche in die Riemenspannvorrichtung eingebracht werden, können somit zum Maschinenkörper hin kompensiert werden.

Dabei kann es vorteilhafter Weise vorgesehen sein, dass das Stellglied von einem Langloch gebildet ist, das sich in Spannrichtung erstreckt. Über das Langloch als Stellglied lässt sich eine kostengünstige Lösung darstellen. Wenn ein Halter an einem Gegenhalter insbesondere flächig in einer Ebene verstellbar ist, dann kann die Oszillation besonders effektiv ausgeglichen werden.

Eine besonders stabile Bauweise kann dadurch erreicht werden, dass die Spannteile jeweils beidseitig der Spannrollen Halter aufweisen, dass an den Haltern Spannstücke gehalten sind, die die Halter verbinden, und dass den Spannstücken Fixierelemente zugeordnet sind.

Alternativ kann vorgesehen sein, dass die Spannteile jeweils einen Halter aufweisen, dass an den Haltern ein Spannstück gehalten ist, das die Halter verbindet, dass das Spannstück zwischen zwei umlaufenden Antriebsriemen hindurchgeführt ist, und dass dem Spannstück ein Fixierelement zugeordnet ist. Hierdurch ergibt sich eine platzsparende Bauweise.

Eine einfache Verstellmöglichkeit wird für die Spannteile dann geboten, wenn vorgesehen ist, dass das / die Fixierelement(e) an dem oder den Spannstücken verstellbar sind, um die Halter in Spannrichtung gegeneinander zu verstellen. Eine stufenlose Verstellung kann dadurch erreicht werden, dass die Spannstücke Gewinde aufweisen, auf denen das als Mutter ausgebildete Fixierelement verstellbar ist.

Eine denkbare Erfindungsalternative kann dadurch gekennzeichnet sein, dass die beiden Spannteile mittels einer Linearführung miteinander gekoppelt sind. Dann sind die Spannteile sicher über die Linearführung miteinander verbunden. Diese Funktion kann mit geringem Teileaufwand dadurch verwirklicht werden, dass eines der Spannteile ein Führungselement trägt, und dass das Führungselement eine Gleitführung bildet, die mit einer Gleitführung des anderen Spannteils zusammenarbeitet.

Hierbei ist auch denkbar, dass das Führungselement fest mit dem Spannteil verbunden oder einstückig an dieses angeformt ist, dass zwei Gleitführungen von dem Führungselement abgewinkelt sind, die die den Gleitführungen gegenüberliegenden Kanten des zweiten Spannteils zur Bildung der Linearführung übergreifen. Dann sind die Spannteile sicher gegeneinander abgestützt. Somit können hohe Kräfte zwischen den Spannteilen übertragen werden.

Wenn vorgesehen ist, dass beide Spannteile jeweils ein Führungselement aufweisen, dann ist eine symmetrische Kraftverteilung möglich.

Eine besonders bevorzugte Erfindungsvariante sieht vor, dass einem oder beiden Spannteilen ein Dämpfungselement zugeordnet ist, um das Spannteil gegenüber einem Maschinenkörper abzustützen. Auf diese Weise können etwaig anstehende Restschwingungen gedämpft werden, was die Belastung des Maschinenkörpers weiter reduziert.

Eine denkbare Erfindungsvariante ist derart, dass die Spannteile zueinander beabstandete Halter aufweisen, zwischen denen die Spannrollen angeordnet sind, und dass die Spannrollen an beiden Haltern befestigt sind. Dadurch sind die Spannrollen mit geringem Teileaufwand sicher gelagert. Der Teileaufwand lässt sich weiter dadurch reduzieren, dass die Spannteile baugleiche Halter aufweisen, an denen die Spannrollen gehalten sind und/oder dass die Halter eines Spannteils mittels eines Verbindungselementes miteinander verbunden sind, wobei das Verbindungselement vorzugsweise das Stellglied zur linearen Verstellung des Spannteils aufweist.

Besonders bevorzugt ist es vorgesehen, dass die Halter eines Spannteils mittels eines Verbindungselementes miteinander verbunden sind, wobei das Verbindungselement vorzugsweise das Stellglied zur linearen Verstellung des Spannteils aufweist. Hierdurch ergibt sich eine stabile Konstruktion.

Gemäß einer weiteren Erfindungsvariante kann es vorgesehen sein, dass die Riemenspannvorrichtung ein federelastisches Element aufweist, das derart ausgebildet und angeordnet ist, dass die Spannrollen federelastisch gegeneinander entgegen der Vorspannrichtung ausweichen können. Mit dieser Maßnahme kann ein Vorspann-Verlust, beispielsweise in Folge der Längung eines Antriebsriemens ausgeglichen werden. Besonders bevorzugt ist das federelastisch Element in dem Kraftfluss-Bereich zwischen den beiden Spannteilen angeordnet. Es kann insbesondere im Bereich der Spannstücke wirken.

Die Erfindung wird im Folgenden anhand von in den Zeichnungen dargestellten Ausführungsbeispielen näher erläutert.

Es zeigen:
- Figur 1:: Eine Riemenspannvorrichtung in perspektivischer Darstellung,
- Figur 2:: Die Riemenspannvorrichtung gemäß Figur 1 in Ansicht von vorne,
- Figur 3:: Die Riemenspannvorrichtung gemäß Figuren 1 und 2 in Ansicht von oben,
- Figur 4:: In perspektivischer Darstellung eine weitere Ausgestaltungsvariante einer Riemenspannvorrichtung.

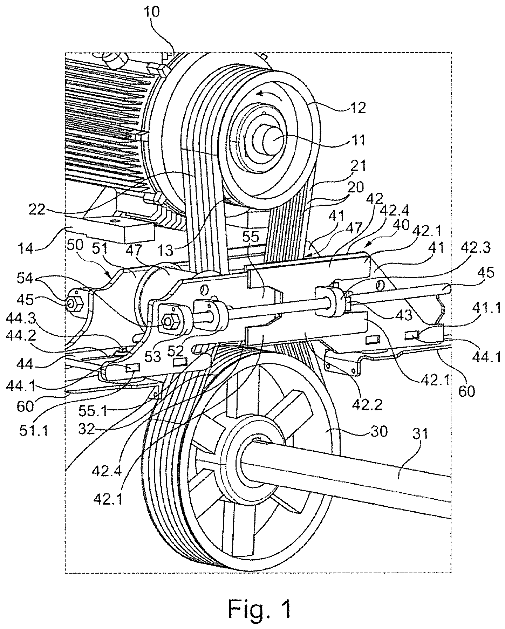

Figur 1 zeigt eine Riemenspannvorrichtung für einen Gesteinsbrecher, insbesondere einen Kegelbrecher. Dabei ist ein Antrieb 10 verwendet, der vorliegend als Elektromotor ausgebildet ist. Der Elektromotor wird typischerweise von einem Generator gespeist, welcher wiederum von dem Verbrennungsmotor des Gesteinsbrechers angetrieben wird. Alternativ ist auch ein Direktantrieb mittels schaltbarer Kupplung denkbar. Auf der Antriebswelle 11 des Antriebs 10 ist eine Riemenscheibe 12 unverdrehbar fixiert. Die Riemenspannvorrichtung umfasst weiterhin eine zweite Riemenscheibe 30, die drehfest mit einer Antriebswelle 31 gekoppelt ist. Die Antriebswelle 31 führt zu dem Brechaggregat des Gesteinsbrechers. Die beiden Riemenscheiben 12 und 30 sind mittels Antriebsriemen 20 miteinander gekoppelt. Vorliegend wird eine Vielzahl von einzelnen Antriebsriemen 20 verwendet, die jeweils um die beiden Riemenscheiben 12 und 30 geschlungen sind. Zwischen den beiden Riemenscheiben 12 und 30 ist die Riemenspannvorrichtung angeordnet. Dabei umfasst die Riemenspannvorrichtung zwei Spannrollen 47. Eine Spannrolle 47 wirkt auf den Lasttrum 21 und die andere Spannrolle 47 auf den Leertrum 22 der Antriebsriemen 20. Die Spannrollen 47 weisen eine zylindrische Oberfläche auf, die endseitig mit umlaufenden Wulsten beidseitig abgeschlossen ist. Die Spannrollen 47 wirken auf die Rückenseite der Antriebsriemen 20 ein.

Wie Figur 1 erkennen lässt, sind die Spannrollen 47 jeweils an Spannteilen 50 der Riemenspannvorrichtung gehalten. Das Spannteil 40 besitzt zwei Halter 41. Diese können insbesondere plattenartig aufgebaut sein. Die Halter 41 sind über ein Verbindungselement 44 miteinander gekoppelt. Das Verbindungselement 44 besitzt seitliche Vorsprünge 44.1 und ist ebenfalls plattenförmiges ausgebildet. Die Vorsprünge 44.1 sind in Aufnahmen 41.1 der Halter 41 eingestellt. Auf diese Weise werden die beiden Halter 41 zueinander beabstandet gehalten und exakt gegeneinander ausgerichtet. Das Verbindungselement 44 kann mit den Haltern 41 verbunden, beispielsweise verschweißt sein. An dem Halter 41 ist weiterhin ein Führungselement 42 befestigt. Das Führungselement 42 besitzt ein Basisteil 42.2, an das Ansätze 42.1 angeformt sind. Im Bereich des Basisteils 42.2 ist ein Lagerstück 42.3 an dem Führungselement 42 befestigt. Das Lagerstück 72.3 besitzt eine Durchführung. Durch diese kann ein Spannstück 45 in durchgeführt werden. Das Spannstück 45 ist vorliegend als Gewindestange ausgebildet. Das Spannstück 45 kann axial an dem Lagerstück 42.3 mittels eines Fixierelementes 43 in eine Richtung festgelegt werden. Beispielsweise kann das Fixierelement 43 als Mutter ausgebildet sein. An den beiden gegenüberliegenden oberen und unteren Kanten weist das Führungselement 42 Gleitführungen 42.4 auf. Die Gleitführungen 42.4 sind vorliegend in einfacher Weise als Abwinklungen ausgebildet und in Richtung auf die Antriebsriemen 20 abgewinkelt.

Das zweite Spannteil 50 weist ebenso wie das erste Spannteil 40 zwei Halter 51 auf. Diese sind wieder mittels eines Verbindungselements 44 miteinander verbunden. Auch hier weist das Verbindungselement 44 Vorsprünge 44.1 auf, die in Aufnahmen 51.1 der Halter 51 eingestellt sind. Das Verbindungselement 44 ist mit den Haltern 51 verbunden, beispielsweise verschweißt. Vorzugsweise sind die Halter 51 des Spannteils 50 identisch mit den Haltern 41 des Spannteils 40, sodass sich ein verringerter Teileaufwand ergibt. Auf den Haltern 51 sind Lagerstücke 52 fixiert. Die beiden Lagerstücke 52 weisen Führungen auf. Durch diese Führungen sind die beiden Spannstücke 45 hindurchgeführt. Weiterhin sind auf den Haltern 51 zusätzliche Lagerstücke 53 befestigt. Die Spannstücke 45 sind durch Aufnahmen dieser Lagerstücke 53 hindurchgeführt. Sie können an den Lagerstücken 53 mittels Fixierelementen 54, die vorliegend als Muttern ausgebildet sein können, fixiert werden. Mithin ist die Gestaltung also so gewählt, dass das Fixierelement 54 die Verschiebung des Spannstücks 45 in eine Richtung axial blockiert. Das Fixierelement 43 blockiert die Verschiebung in die andere Richtung.

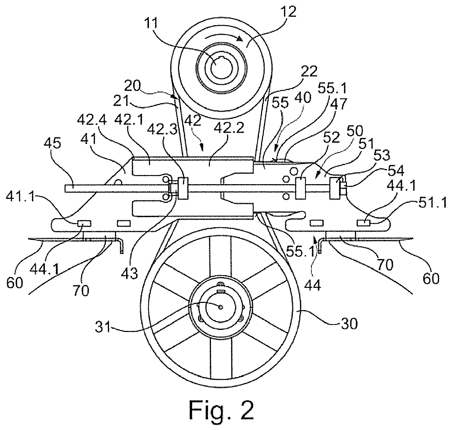

Figur 1 lässt weiter erkennen, dass im Bereich der Verbindungselemente 44 ein Stellglied 44.2 vorgesehen ist. Das Stellglied 44.2 ist dabei als Langloch ausgebildet. Es erstreckt sich in der Bildebene gemäß Figur 2 in horizontaler Richtung von links nach rechts. Bei der vorliegenden Riemenspannvorrichtung sind beide Spannteile 40, 50 mit Stellgliedern 44.2 ausgestattet. Auf diese Weise kann die Riemenspannvorrichtung mittels der Stellglieder 44.2 in der Bildebene gemäß Figur 2 von links nach rechts und umgekehrt verstellt werden. Figur 1 zeigt, dass im Bereich maschinenseitiger Träger 60 einen Dämpfungselement 70 angeordnet ist. Das Dämpfungselement stützt die Spannteile 40,50 gegenüber den Trägern 60 ab, sodass eine Schwingungsdämpfung erreicht werden kann. Im vorliegenden Ausführungsbeispiel sind die Dämpfungselemente 70 gegenüber der Unterseite der Verbindungselemente 44 abgestützt. Die Dämpfungselemente 70 besitzen integrierte Befestigungselemente 44.3, die durch die Stellglieder 44.2 hindurchgeführt sind. Mit den Stellgliedern 44.2 und den Befestigungselementen 44.3 wird mithin eine Art Linearführung geschaffen, die eine lineare Verstellung der Spannteile 40,50 ermöglicht. Die Befestigungselemente 44.3 verhindern jedoch eine Verstellung der Spannteile 40,50 senkrecht zu der Ebene der Verbindungselemente 44.

Wie Figur 1 weiter zeigt, besitzt das Spannteil 50 an seinen Haltern 51 eine Gleitführung 55. Dabei kann, wie vorliegend gezeigt die Gleitführung 45 von den gegenüberliegenden Kanten 55.1 der Halter 51 gebildet sein.

Zur Montage der gezeigten Riemenspannvorrichtung werden die Spannteile 40,50 mit ihren Spannrollen 47 jeweils gegen den Last-bzw. Leertrum der Antriebsriemen 20 gesetzt. Dabei wird das Spannteil 50 mit seiner Gleitführung 55 in die Gleitführung 42.4 des Spannteils 40 eingeschoben. Im vorliegenden Fall gleiten also die Kanten 55.1 der Halter 51 an den abgewinkelten Gleitführungen 42.4 des Führungselements 42 entlang. Nun kann das Spannstück 45 durch die Lagerstücke 42.3, 52 und 53 hindurchgesetzt werden. Wie die Zeichnungen erkennen lassen, werden dabei auf beiden Seiten der Riemenspannvorrichtung vorzugsweise identische Spannstücke 45 eingesetzt. Dann können die Fixierelemente 43 und 54 auf die Spannstücke 45 aufgeschraubt werden. Beim gegenläufigen verspannen der Fixierelemente 54 werden die Spannrollen 47 aufeinander zu bewegt. Sie spannen damit die Antriebsriemen 20 in der in Figur 1 bzw. 2 gezeigten Weise. Die Fixierelemente 43 bzw. 45 sind mit Selbsthemmung ausgelegt, sodass sich auch während des Betriebseinsatzes keine Verstellung der Spannteile 40, 50 ergibt. Denkbar ist es auch, dass die Fixierelemente 43, 45 in der Montagestellung mittels eines Blockierelementes gesichert sind. So können beispielsweise die Fixierelemente 54 jeweils mit den Spannstücken 45 verschweißt sein. Das Fixierelement 43, das zum Verstellen dient, kann mittels eines lösbaren Blockierstücks, beispielsweise mittels eines abgewinkelten Blechs an dem Lagerstück 43 festgelegt werden.

Während des Betriebseinsatzes rotieren die Antriebsriemen 20, wobei in den Figuren 1 und 2 die Rotationsrichtung mit einem Pfeil angedeutet ist. Dabei laufen die Antriebsriemen 20 um die Riemenscheiben 12 und 30 um. Die Spannrollen 47 wirken auf die Rückseite der Antriebsriemen 20 ein und spannen damit sowohl den Last- als auch den Leertrum. Wenn nun während des Betriebseinsatzes Schwingungen von dem Brechaggregat über die Antriebswelle 31 übertragen werden, so werden diese Schwingungen auch in die Antriebsriemen 20 und von diesen in die Riemenspannvorrichtung übertragen. Ein Übertragen dieser Schwingungen in das Maschinenchassis kann mit der erfindungsgemäßen Riemenspannvorrichtung ausgeglichen werden. Insbesondere ermöglicht die Verschiebungen der Spannteile 40 und 50 an den Stellgliedern 44.2 ein Ausgleich dieser vorzugsweise oszillierenden Bewegungen. In Laufrichtung der Antriebsriemen 20 werden nur geringe Kräfte übertragen, die mit den Befestigungselement 44.3 abgefangen werden. Mit anderen Worten müssen die Fixierelemente 44.3 die Riemenspannvorrichtung lediglich in Position halten. Eventuell hier auftretende Schwingungen werden zudem mit den Dämpfungselementen 70 gedämpft.

Mit der erfindungsgemäßen Riemenspannvorrichtung kann auch ohne weiteres die Drehrichtung umgekehrt werden. Dann wechseln lediglich Last-und Leertrum 21, 22.

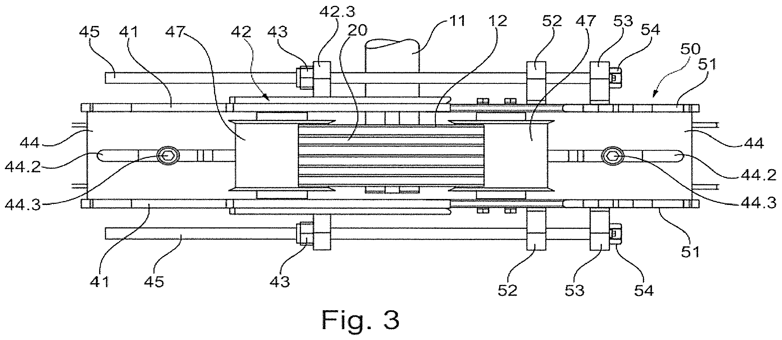

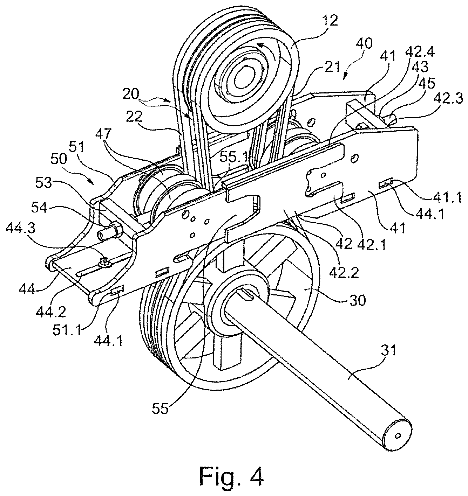

In Figur 4 ist eine weitere Ausgestaltungsvariante der Erfindung dargestellt. Die dort gezeigte Riemenspannvorrichtung hat im Wesentlichen einen ähnlichen Aufbau wie die Riemenspannvorrichtung gemäß den Figuren 1-3, sodass nachfolgend nur auf die Unterschiede eingegangen werden muss. Die Riemenspannvorrichtung weist wieder zwei Spannteile 40, 50 auf. Die Spannteile 40, 50 besitzen zwei Halter 41 bzw. 51. Die Halter 41, 51 sind zueinander parallel beabstandet gehalten und mittels Verbindungselementen 44 miteinander verbunden. Weiterhin sind zwischen den Haltern 41 und 51 Lagerstücke 53, 42.3 vorgesehen. Die Lagerstücke 53, 2 und 42.3 weisen Durchführungen auf. Durch diese Durchführungen kann ein Spannstück 45 in Form einer Gewindestange hindurchgeschoben werden. Wie Figur 4 erkennen lässt, ist das Spannstück 45 im Bereich zwischen den Haltern 41 bzw. 51 geführt. Auf den Riemenscheiben 12, 30 sind die Antriebsriemen in Paaren aufgelegt. Zwischen den Paaren ist ein Freiraum geschaffen durch die das Spannstück 45 hindurchgesetzt ist. Die Riemenspannvorrichtung umfasst vier Spannrollen 47. Diese sind wieder an den Haltern 41 bzw. 51 angebaut, wobei an jedem Halter 41, 51 jeweils eine Spannrolle 47 gelagert ist. Wie Figur 4 erkennen lässt, ist das Spannstück 45 zwischen den Spannrollen 47 hindurchgeführt.

Zur Montage der Riemenspannvorrichtung werden, wie bei der Riemenspannvorrichtung gemäß Figur 1-3 die beiden Spannteile 40, 50 ineinander gesteckt. Dabei kommen die Spannrollen 47 an den Rücken der Antriebsriemen 20 zum Liegen. Das Spannstück 45 kann durch die fluchtenden Durchbrüche der Lagerstücke 42.3 und 53 hindurch gesteckt werden. Mittels der Fixierelemente 43 und 54 lassen sich die Spannteile 40, 50 gegeneinander verspannen. Dann werden auch die Antriebsriemen mittels der Spannrollen 47 gespannt.

Ebenso wie bei der Riemenspannvorrichtung gemäß den Figuren 1-3 wird bei der Riemenspannvorrichtung gemäß Figur 4 eine symmetrische Verspannung der Spannteile 40, 50 erreicht um einen gleichmäßigen Spanndruck auf die Antriebsriemen 20 aufzubringen. Infolge der zentrischen Verspannung gemäß Figur 4 kann ein geringeres Bauvolumen der Riemenspannvorrichtung erreicht werden.

Eine Weiterbildung der Erfindung kann ein flexibles Element vorsehen. Dieses ist insbesondere im Kraftfluss Bereich zwischen den beiden Spannrollen 47 angeordnet. Dabei ist das flexible Element derart ausgestaltet und angeordnet, dass die beiden Spannrollen 47 entgegen der Vorspannrichtung gegeneinander ausweichen können. Denkbar ist es, dass als flexibles Element eine Feder eingesetzt wird. Diese kann beispielsweise als Tellerfeder oder sonstige Feder im Bereich zumindest eines Spannstückes 45 integriert sein. Besonders bevorzugt ist das Federelement im Bereich zwischen dem Spannstück 45 und einem Fixierelement 54 eingesetzt. Selbstverständlich ist es auch möglich, bei der Verwendung mehrerer Spannstücke 45 jedem Spannstück 45 ein elastisches Element zuzuordnen.

Die erfindungsgemäße Riemenspannvorrichtung kann für einen Gesteinsbrecher oder eine Siebmaschine zum Spannen wenigstens eines umlaufenden Antriebsriemens 20 verwendet werden. Der Antriebsriemen 20 ist dabei um eine Riemenscheibe 12 eines Antriebs 10 umgelenkt und weist einen Last-, sowie einen Leertrum 21, 22 auf, wobei mittels des Antriebsriemens 20 der Antrieb 10 mit einem Brechaggregat, einer Siebeinheit, einem Generator oder dergleichen des Gesteinsbrechers antreibbar ist,

Erfindungsgemäß weist die Riemenspannvorrichtung zwei Spannrollen 47 auf, die jeweils an einem Halter 41, 51 eines Spannteils 40, 50 drehbar gelagert sind, wobei eine Spannrolle 47 dem Leertrum 22 und die andere dem Lasttrum 21 zugeordnet ist. Die beiden Spannteile (40, 50) sind gegeneinander zwischen einer Öffnungs- und einer Spannposition verstellbar und in der Spannposition zumindest entgegen der Spannrichtung gegeneinander abgestützt, insbesondere gegeneinander blockierbar.

Mit einer solchen Anordnung ergeben sich besondere Gebrauchsvorteile. So ist insbesondere eine beidseitige Spannung der Antriebsriemen möglich. Dies führt zu einer Vergrößerung des Umschlingungswinkels. Dadurch lässt sich die erforderliche Anzahl der Antriebsriemen reduzieren und/oder es kann die Riemenqualität reduziert werden und/oder eine Reduzierung der Riemenvorspannkraft wird möglich. Darüber hinaus bietet die Erfindung auch die Möglichkeit der Drehrichtungsumkehr. In diesem Sinne kann der Leer-und der Lasttrum gewechselt werden.

Die erfindungsgemäße Anordnung bietet insbesondere die Möglichkeit einer "schwimmend gelagerten Anordnung". Das bedeutet, dass sich die Spannrollen gegeneinander abstützen und nur geringe Kräfte während des Betriebseinsatzes in das Maschinenchassis übertragen werden. Hierdurch wird eine Verminderung von Schwingungseinleitungen in das Maschinenchassis erreicht. Darüber hinaus kann beispielsweise eine Spannungsverlustfreie Reaktion der Spanneinheit auf Änderung der Lastzustände des Brecheraggregats (Ausgleich von Spitzen z.B. durch unbrechbares Material oder Übergang von Leer- auf Lastlauf oder Anfahren / Abbremsen des Brechaggregats etc.) erreicht werden.

## Patentansprüche

1. Riemenspannvorrichtung für einen Gesteinsbrecher oder eine Siebmaschine zum Spannen wenigstens eines umlaufenden Antriebsriemens (20), der um eine Riemenscheibe (12) eines Antriebs (10) umgelenkt ist und einen Last-, sowie einen Leertrum (21, 22) aufweist, wobei mittels des Antriebsriemens (20) der Antrieb (10) mit einem Brechaggregat, einer Siebeinheit, einem Generator oder dergleichen des Gesteinsbrechers antreibbar ist,
dass die Riemenspannvorrichtung zwei Spannrollen (47) aufweist, die jeweils an einem Halter (41, 51) eines Spannteils (40, 50) drehbar gelagert sind, wobei eine Spannrolle (47) dem Leertrum (22) und die andere dem Lasttrum (21) zuordenbar ist, und dass die beiden Spannteile (40, 50) gegeneinander zwischen einer Öffnungs- und einer Spannposition verstellbar und in der Spannposition zumindest entgegen der Spannrichtung gegeneinander abgestützt, insbesondere gegeneinander blockierbar sind,
**dadurch gekennzeichnet,**
**dass** eines der Spannteile (40) ein Führungselement (42) trägt, dass das Führungselement (42) eine Gleitführung (42.4) bildet, die mit einer Gleitführung (55) des anderen Spannteils (50) zusammenarbeitet,
**dass** das Führungselement (42) fest mit dem Spannteil (40) verbunden oder einstückig an dieses angeformt ist,
und **dass** zwei Gleitführungen (42.4) von dem Führungselement (42) abgewinkelt sind, die die den Gleitführungen (42.4) gegenüberliegenden Kanten (55.1) des zweiten Spannteils (50) zur Bildung der Linearführung übergreifen.

2. Riemenspannvorrichtung nach Anspruch 1,
**dadurch gekennzeichnet,**
**dass** die beiden Spannteile (40, 50) jeweils ein Stellglied (44.2) aufweisen, mittels dem sie in und entgegengesetzt zur Spannrichtung verstellbar sind.

3. Riemenspannvorrichtung nach Anspruch 2
**dadurch gekennzeichnet,**
**dass** das Stellglied (44.2) von einem Langloch gebildet ist, das sich in Spannrichtung erstreckt, oder dass das Stellglied (44.2) von einem Halter gebildet ist, der an einem Gegenhalter, insbesondere in einer Ebene verschiebbar ist

4. Riemenspannvorrichtung nach einem der Ansprüche 1 bis 3,
**dadurch gekennzeichnet,**
**dass** die Spannteile (40, 50) jeweils beidseitig der Spannrollen (47) Halter (41, 51) aufweisen, dass an den Haltern (41) Spannstücke (45) gehalten sind, die die Halter (41, 51) verbinden, und dass den Spannstücken (45) Fixierelemente (43) zugeordnet sind.

5. Riemenspannvorrichtung nach einem der Ansprüche 1 bis 3,
**dadurch gekennzeichnet,**
**dass** die Spannteile (40, 50) jeweils einen Halter (41. 51) aufweisen, dass an den Haltern (41, 51) ein Spannstück (45) gehalten ist, das die Halter (41, 51) verbindet, dass das Spannstück (45) zwischen zwei umlaufenden Antriebsriemen (20) hindurchgeführt ist, und dass dem Spannstück (45) ein Fixierelement (43) zugeordnet ist.

6. Riemenspannvorrichtung nach Anspruch 4 oder 5,
**dadurch gekennzeichnet,**
**dass** das / die Fixierelement(e) (43) an dem oder den Spannstücken (45) verstellbar sind, um die Halter (41, 51) in Spannrichtung gegeneinander zu verstellen.

7. Riemenspannvorrichtung nach einem der Ansprüche 4 bis 5 **dadurch gekennzeichnet,**
**dass** die Spannstücke (45) Gewinde aufweisen, auf denen das als Mutter ausgebildete Fixierelement (43) verstellbar ist.

8. Riemenspannvorrichtung nach einem der Ansprüche 1 bis 7,
**dadurch gekennzeichnet,**
**dass** die beiden Spannteile (40, 50) mittels einer Linearführung miteinander gekoppelt sind.

9. Riemenspannvorrichtung nach einem der Ansprüche 1 oder 7,
**dadurch gekennzeichnet,**
**dass** beide Spannteile (40, 50) jeweils ein Führungselement (42) aufweisen.

10. Riemenspannvorrichtung nach einem der Ansprüche 1 bis 9,
**dadurch gekennzeichnet,**
**dass** einem oder beiden Spannteilen (40, 50) ein Dämpfungselement (70) zugeordnet ist, um das Spannteil (40, 50) gegenüber einem Maschinenkörper abzustützen.

11. Riemenspannvorrichtung nach einem der Ansprüche 1 bis 10,
**dadurch gekennzeichnet,**
**dass** die Spannteile (40, 50) zueinander beabstandete Halter (41, 51) aufweisen, zwischen denen die Spannrollen (47) angeordnet sind, und dass die Spannrollen (47) an beiden Haltern (41. 51) befestigt sind.

12. Riemenspannvorrichtung nach einem der Ansprüche 1 bis 11,
**dadurch gekennzeichnet,**
**dass** die Spannteile (40, 50) baugleiche Halter (41, 51) aufweisen, an denen die Spannrollen (47) gehalten sind.

13. Riemenspannvorrichtung nach einem der Ansprüche 11 oder 12,
**dadurch gekennzeichnet,**
**dass** die Halter (41, 51) eines Spannteils (40, 50) mittels eines Verbindungselementes (44) miteinander verbunden sind, wobei das Verbindungselement (44) vorzugsweise das Stellglied (44.2) zur linearen Verstellung des Spannteils (40, 50) aufweist.

14. Riemenspannvorrichtung nach einem der Ansprüche 1 bis 13,
**dadurch gekennzeichnet,**
**dass** sie Schwingungsdämpfungselemente (70) aufweist.

15. Riemenspannvorrichtung nach einem der Ansprüche 1 bis 14,
**dadurch gekennzeichnet,**
**dass** sie ein federelastisches Element aufweist, das derart ausgebildet und angeordnet ist, dass die Spannrollen (47) federelastisch gegeneinander entgegen der Vorspannrichtung ausweichen können.

## Claims

1. A belt-tensioning device for a rock crusher or a screening machine for tensioning at least one revolving drive belt (20) which is deflected around a pulley (12) of a drive (10) and has a tight side and a slack side (21, 22), wherein by means of the drive belt (20) the drive (10) is drivable together with a breaking aggregate, a screening unit, a generator or the like of the rock crusher,
the belt-tensioning device has two tensioning rollers (47), each of which is rotatably mounted on a holder (41, 51) of a tensioning part (40, 50), wherein one tensioning roller (47) is assignable to the slack side (22) of belt and the other to the tight side (21) of the belt, and the two tensioning parts (40, 50) are adjustable with respect to each other between an opening and a tensioning position and in the tensioning position are supported against each other, in particular are blockable against each other, at least counter to the tensioning direction,
**characterised in that**
one of the tensioning parts (40) bears a guide element (42), **in that** the guide element (42) forms a sliding guide (42.4) which cooperates with a sliding guide (55) of the other tensioning part (50),
**in that** the guide element (42) is fixedly connected to the tensioning part (40) or integrally formed thereon,
and **in that** two sliding guides (42.4) are angled away from the guide element (42) and engage over the edges (55.1) of the second tensioning part (50) opposite the sliding guides (42.4) to form the linear guide.

2. The belt-tensioning device according to claim 1,
**characterised in that**
the two tensioning parts (40, 50) each have an actuator (44.2), by means of which they are adjustable in and counter to the tensioning direction.

3. The belt-tensioning device according to claim 2,
**characterised in that**
the actuator (44.2) is formed by a slot which extends in the tensioning direction, or **in that** the actuator (44.2) is formed by a holder which is displaceable on a counterholder, in particular in one plane.

4. The belt-tensioning device according to one of claims 1 to 3,
**characterised in that**
the tensioning parts (40, 50) each have holders (41, 51) on both sides of the tensioning rollers (47), **in that** clamping pieces (45) which connect the holders (41, 51) are held on the holders (41), and **in that** fixing elements (43) are assigned to the clamping pieces (45).

5. The belt-tensioning device according to one of claims 1 to 3,
**characterised in that**
the tensioning parts (40, 50) each have a holder (41, 51), **in that** a clamping piece (45) which connects the holders (41, 51) is held on the holders (41, 51), **in that** the clamping piece (45) is passed between two revolving drive belts (20), and **in that** a fixing element (43) is assigned to the clamping piece (45).

6. The belt-tensioning device according to claim 4 or 5,
**characterised in that**
the fixing element(s) (43) is/are adjustable on the one or more clamping pieces (45) in order to adjust the holders (41, 51) with respect to each other in the tensioning direction.

7. The belt-tensioning device according to one of claims 4 to 5,
**characterised in that**
the clamping pieces (45) have threads, on which the fixing element (43) designed as a nut is adjustable.

8. The belt-tensioning device according to one of claims 1 to 7,
**characterised in that**
the two tensioning parts (40, 50) are coupled together by means of a linear guide.

9. The belt-tensioning device according to one of claims 1 or 7,
**characterised in that**
both tensioning parts (40, 50) each have a guide element (42).

10. The belt-tensioning device according to one of claims 1 to 9,
**characterised in that**
a damping element (70) is assigned to one or both tensioning parts (40, 50), in order to support the tensioning part (40, 50) against a machine body.

11. The belt-tensioning device according to one of claims 1 to 10,
**characterised in that**
the tensioning parts (40, 50) have mutually spaced holders (41, 51) between which the tensioning rollers (47) are arranged, and **in that** the tensioning rollers (47) are attached to both holders (41, 51).

12. The belt-tensioning device according to one of claims 1 to 11,
**characterised in that**
the tensioning parts (40, 50) have identically constructed holders (41, 51) on which the tensioning rollers (47) are held.

13. The belt-tensioning device according to one of claims 11 or 12,
**characterised in that**
the holders (41, 51) of a tensioning part (40, 50) are connected to one another by means of a connecting element (44), wherein the connecting element (44) preferably has the actuator (44.2) for the linear adjustment of the tensioning part (40, 50).

14. The belt-tensioning device according to one of claims 1 to 13,
**characterised in that**
it comprises vibration damping elements (70).

15. The belt-tensioning device according to one of claims 1 to 14,
**characterised in that**
it comprises a resilient element which is designed and arranged in such a way that the tensioning rollers (47) can yield resiliently with respect to each other counter to the pretensioning direction.

## Revendications

1. Dispositif tendeur de courroie pour un concasseur de roche ou un crible, servant à tendre au moins une courroie d'entraînement continue (20) qui est renvoyée autour d'une poulie (12) d'un entraînement (10) et qui présente un brin tendu, ainsi qu'un brin mou (21, 22), la courroie d'entraînement (20) permettant d'entraîner l'entraînement (10) avec un ensemble de broyage, une unité de criblage, un générateur ou un élément similaire du concasseur,
le dispositif tendeur de courroie présente deux galets tendeurs (47) qui sont respectivement montés de manière à pouvoir tourner sur un support (41, 51) d'un élément tendeur (40, 50), un galet tendeur (47) étant associé au brin mou (22) et l'autre au brin tendu (21), les deux éléments tendeurs (40, 50) pouvant être déplacés l'un par rapport à l'autre entre une position d'ouverture et une position de tension et prenant appui l'un contre l'autre dans la position de tension, au moins dans le sens opposé de la tension et pouvant en particulier être bloqués l'un contre l'autre,
**caractérisé en ce que**
l'un des éléments tendeurs (40) porte un élément de guidage (42), l'élément de guidage (42) forme un guide coulissant (42.4) qui coopère avec un guide coulissant (55) de l'autre élément tendeur (50),
**en ce que** l'élément de guidage (42) est relié de manière fixe à l'élément tendeur (40) ou formé d'un seul tenant sur celui-ci
et **en ce que** deux guides coulissants (42.4) sont inclinés par rapport à l'élément de guidage (42), lesquels s'engagent sur les bords (55.1) du deuxième élément tendeur (50) opposés aux guides coulissants (42.4) pour former le guide linéaire.

2. Dispositif tendeur de courroie selon la revendication 1,
**caractérisé en ce que**
les deux éléments tendeurs (40, 50) présentent respectivement un élément de réglage (44.2) au moyen duquel ils peuvent être réglés dans le sens de la tension et dans le sens opposé.

3. Dispositif tendeur de courroie selon la revendication 2,
**caractérisé en ce que**
l'élément de réglage (44.2) est formé par un trou oblong qui s'étend dans le sens de la tension ou **en ce que** l'élément de réglage (44.2) est formé par un support qui peut être déplacé sur un contre-support, en particulier dans un plan.

4. Dispositif tendeur de courroie selon l'une quelconque des revendications 1 à 3,
**caractérisé en ce que**
les éléments tendeurs (40, 50) présentent des supports (41, 51) de chaque côté des galets tendeurs (47), **en ce que** des organes tendeurs (45) qui relient les supports (41, 51) sont maintenus sur les supports (41) et **en ce que** des éléments de fixation (43) sont associés aux organes tendeurs (45).

5. Dispositif tendeur de courroie selon l'une quelconque des revendications 1 à 3,
**caractérisé en ce que**
les éléments tendeurs (40, 50) présentent respectivement un support (41. 51), **en ce qu'**un organe tendeur (45), qui relie les supports (41, 51), est maintenu sur les supports (41, 51), **en ce que** l'organe tendeur (45) est introduit entre deux courroies d'entraînement continues (20) et **en ce qu'**un élément de fixation (43) est associé à l'organe tendeur (45).

6. Dispositif tendeur de courroie selon la revendication 4 ou 5,
**caractérisé en ce que**
le ou les éléments de fixation (43) sont réglables sur le ou les organes tendeurs (45) pour ajuster les supports (41, 51) l'un contre l'autre dans le sens de la tension.

7. Dispositif tendeur de courroie selon l'une quelconque des revendications 4 à 5,
**caractérisé en ce que**
les organes tendeurs (45) présentent des filets sur lesquels l'élément de fixation (43) conçu en forme d'écrou est réglable.

8. Dispositif tendeur de courroie selon l'une quelconque des revendications 1 à 7,
**caractérisé en ce que**
les deux éléments tendeurs (40, 50) sont accouplés l'un à l'autre au moyen d'un guide linéaire.

9. Dispositif tendeur de courroie selon l'une quelconque des revendications 1 ou 7,
**caractérisé en ce que**
les deux éléments tendeurs (40, 50) présentent respectivement un élément de guidage (42).

10. Dispositif tendeur de courroie selon l'une quelconque des revendications 1 à 9,
**caractérisé en ce que**
un élément amortisseur (70) est associé à l'un ou aux deux éléments tendeurs (40, 50) afin de supporter l'élément tendeur (40, 50) par rapport à un corps de machine.

11. Dispositif tendeur de courroie selon l'une quelconque des revendications 1 à 10,
**caractérisé en ce que**
les éléments tendeurs (40, 50) présentent des supports (41, 51) espacés les uns des autres, entre lesquels sont disposés les galets tendeurs (47) et **en ce que** les galets tendeurs (47) sont fixés sur les deux supports (41. 51).

12. Dispositif tendeur de courroie selon l'une quelconque des revendications 1 à 11,
**caractérisé en ce que**
les éléments tendeurs (40, 50) présentent des supports (41, 51) de construction identique sur lesquels sont maintenus les galets tendeurs (47).

13. Dispositif tendeur de courroie selon l'une quelconque des revendications 11 ou 12,
**caractérisé en ce que**
les supports (41, 51) d'un élément tendeur (40, 50) sont reliés l'un à l'autre au moyen d'un élément de raccordement (44), l'élément de raccordement (44) comportant de préférence l'élément de réglage (44.2) pour le réglage linéaire de l'élément tendeur (40, 50).

14. Dispositif tendeur de courroie selon l'une quelconque des revendications 1 à 13,
**caractérisé en ce que**
il comprend des éléments amortisseurs de vibrations (70).

15. Dispositif tendeur de courroie selon l'une quelconque des revendications 1 à 14,
**caractérisé en ce que**
il présente un élément élastique conçu et agencé de telle sorte que les galets tendeurs (47) puissent se plier élastiquement l'un contre l'autre dans le sens opposé à la pré-tension.
